# EUROPEAN PATENT APPLICATION

(11) **EP 4 645 548 A1**
(43) Date of publication of application: **05.11.2025**
(21) Application number: 24854428.0
(22) Date of filing: 12.08.2024
(51) Int. Cl.: H01M 50/24, H01M 50/242, H01M 10/6567, H01M 10/613, H01M 10/625, H01M 50/367, H01M 50/342, H01M 50/289, H01M 50/249, H01M 50/213

(54) **BATTERY ASSEMBLY, BATTERY PACK, AND VEHICLE COMPRISING SAME**

(30) Priority: 14.08.2023 KR 20230106480; 09.08.2024 KR 20240107034
(71) Applicant: LG Energy Solution, Ltd., Seoul 07335 (KR)
(72) Inventor: JUNG, Minyong, Daejeon 34122 (KR); CHOI, Bum, Daejeon 34122 (KR); CHUNG, Jaeheon, Daejeon 34122 (KR); KIM, Inhyeok, Daejeon 34122 (KR)
(74) Representative: Goddar, Heinz J.
(86) International application number: PCT/KR2024/011950
(87) International publication number: WO 2025/037877

(57) **Abstract**

A battery assembly of the present disclosure comprises: a plurality of battery cells; a cell frame that houses the plurality of battery cells; and a filling member that seals the upper end of the cell frame, wherein the battery assembly is provided with an isolation part that defines a cooling flow passage space for allowing a cooling medium to fill between the plurality of battery cells, and isolates between the cooling flow passage space and the filling member.

## Description

### [TECHNICAL FIELD]

### Cross Citation with Related Application(s)

This application claims the benefit of Korean Patent Application No. 10-2023-0106480 filed on August 14, 2023 and Korean Patent Application No. 10-2024-0107034 filed on August 9, 2024 in the Korean Intellectual Property Office, the disclosures of which are incorporated herein by reference in their entirety.

The present disclosure relates to a battery assembly, a battery pack and a vehicle comprising the same, and more particularly, to a battery assembly having a direct cooling structure, a battery pack and a vehicle comprising the same.

### [BACKGROUND]

Secondary batteries which are highly applicable to various products and exhibit superior electrical properties such as high energy density, etc. are commonly used not only in portable devices but also in electric vehicles (EVs) or hybrid electric vehicles (HEVs) driven by electrical power sources. Such a secondary battery is widely used as an energy source for enhancing environment friendliness and energy efficiency, in that it has a primary advantage of remarkable reducing the use of fossil fuels, and also generates no by-products from the use of energy.

The type of secondary batteries include lithium ion batteries, lithium polymer batteries, nickel cadmium batteries, nickel hydrogen batteries, nickel zinc batteries and the like. Such a unit secondary battery cell, namely a unit battery cell, has an operating voltage of about 2.5V ~ 4.5V. Therefore, if a higher output voltage is required, a plurality of battery cells may be connected in series to form a battery pack. In addition, depending on the charge/discharge capacity required for the battery pack, a plurality of battery cells may be connected in parallel to form a battery pack. Thus, the number of battery cells included in the battery pack may be variously set in accordance with the required output voltage or charge/discharge capacity.

When battery cells are connected in series/parallel to configure a battery pack in this way, it is common to make a battery cell assembly including a plurality of battery cells and house it in a module case to form a battery module first, and then gathering one or more of such battery modules and adding other components thereto to form a battery pack. In the battery module, as the required battery capacity increases, the importance of technology for efficiently cooling heat generated from the battery cells is gradually increasing, and bottom cooling or side cooling methods using a heat sink mounted on the module case of the battery module have been used.

However, in the case of such a cooling type battery module, the heat generated from the battery cells is transferred to a heat sink on one side of the module case and cooled, and thus a heat transfer pathway is not easily provided on the other side of the module case. Accordingly, there are limitations in that the temperature deviation between one end and the other end of the battery cell assembly becomes intensified, or the cooling efficiency is unsatisfactory as a whole. If the temperature deviation is not resolved, battery module safety and durability issues will arise. If the cooling efficiency is insufficient, it may accelerate the deterioration of the battery cell, or fail to address quickly when thermal runaway occurs in some battery cells. Therefore, if the propagation of thermal runaway is severe, it can lead to disasters such as ignition and explosion of the battery module or the battery pack including the same, which may cause not only property damage but also safety issues.

In order to solve such problems, it has been proposed to use a method of directly cooling the battery cells by filling the inside of the battery module with cooling water or insulating oil instead of using bottom cooling or side cooling. However, conventional direct cooling-type battery modules achieve a waterproof structure by applying various parts, such as adopting a silicone rubber double injection assembly structure and a waterproof foam tape overlapping structure. Such a waterproof structure achieves waterproof performance by inserting a separate member between parts that need to be sealed and applying pressure by a separate fixing member, whereby there is a problem that the battery module step requires various parts, including silicone rubber material parts such as waterproof foam tape, sealant, O-rings, and bolting structures, and the battery pack step requires the use of double or triple sealing parts and thermal grease materials. If various parts are applied in this way, it increases the number of parts, makes the assembly and manufacturing process complicated, and requires a separate fixing structure, which causes an increase of the cost. Furthermore, there is a problem that the assembly and manufacturing processes are sensitive to foreign matters, etc., which are a factor causing many defects.

### [DETAILED DESCRIPTION OF THE INVENTION]

### [Technical Problem]

Therefore, it is an object of the present disclosure to provide a direct cooling-type battery assembly of which assembly and manufacturing process are simplified.

It is another object of the present disclosure to provide a direct cooling-type battery pack of which assembly and manufacturing process are simplified.

It is yet another object of the present disclosure to provide a vehicle comprising the battery pack.

### [Technical Solution]

In order to achieve the above object, according to the of the present disclosure, there is provided a battery assembly comprising: a plurality of battery cells; a cell frame that houses the plurality of battery cells; and a filling member that seals the upper end of the cell frame, wherein the battery assembly is provided with an isolation part that defines a cooling flow passage space for allowing a cooling medium to fill between the plurality of battery cells, and isolates between the cooling flow passage space and the filling member.

The battery assembly of the present disclosure may further comprise a porous member that is located between the isolation part and the filling member or in the inside of the filling member, and has a plurality of holes.

The filling member may penetrate through the holes in the porous member and extend to the upper end of the battery cell.

The porous member may be formed in one or more layers.

Preferably, the porous member may be a non-metallic mesh net.

The mesh net may have 5 to 50 meshes.

The mesh net may have a thickness of 30 µm to 500 µm.

A material of the mesh net may be nylon, PP or PE.

In an embodiment, the cell frame comprises: a bottom part including a cell housing part that houses the plurality of battery cells, and a frame wall body that stands upright upward from the bottom part, wherein the frame wall body is provided with a step part on the inner side of the cell frame, so that the isolation part may be seated on the step part.

The cell frame may comprise a bottom part including a cell housing part that houses each of the plurality of battery cells. the cell housing part is provided with a cell housing groove that houses the plurality of battery cells, respectively, the depth of the cell housing groove is a depth into which a portion of the height of the battery cell is inserted, and an adhesive may be provided between the cell housing groove and the battery cell.

The isolation part may be formed with a hole that penetrate through the plurality of battery cells, respectively.

The battery assembly may further comprise a busbar that conducts electrical connection between the battery cells at the upper end of the battery cells.

The upper end of the isolation part may be located below the busbar.

The filling member may be formed of a potting resin.

The cooling medium may be water or insulating oil.

In order to achieve another object, a battery pack according to a configuration of the present disclosure comprises the battery assembly according to the present disclosure.

A battery pack according to another configuration of the present disclosure comprises a battery assembly; and a pack case that houses the battery assembly. The battery assembly comprises a plurality of battery cells; a cell frame that houses the plurality of battery cells; a filling member that seals the upper end of the cell frame; and an isolation part that defines a cooling flow passage space for allowing a cooling medium to fill between the plurality of battery cells, and isolates between the cooling flow passage space and the filling member. The cell frame forms a venting flow passage for gas or flame generated in the battery assembly between the cell frame and the pack case.

Preferably, the cell frame comprises a protrusion part that protrudes downward from a bottom surface thereof, and the protrusion part makes surface contact with the pack case to define the venting flow passage.

The cell frame comprises: a bottom part including a cell housing part that houses the plurality of battery cells, and a frame wall body that stands upright upward from the bottom part, wherein the frame wall body is provided with a step part on the inner side of the cell frame, so that the isolation part may be seated on the step part.

The cell frame may comprise a bottom part including a cell housing part that houses the plurality of battery cells. the cell housing part is provided with a cell housing groove that houses the plurality of battery cells, respectively, the depth of the cell housing groove is a depth into which a portion of the height of the battery cell is inserted, and an adhesive may be provided between the cell housing groove and the battery cell.

The battery pack may further comprise a busbar that conducts electrical connection between the battery cells at the upper end of the battery cells. The isolation part is formed with a hole that penetrates through the plurality of battery cells, respectively, wherein the upper end of the isolation part is located below the busbar, and the filling member may be formed of a potting resin.

The battery cell may comprise a vent part provided at the lower end of the battery cell to discharge gas within the battery cell.

In order to achieve yet another object, there is also provided a vehicle comprising the battery pack according to the present disclosure.

### [Advantageous Effects]

According to the present disclosure, an immersion cooling-type battery assembly having excellent cooling performance and a battery pack comprising the same are provided. The battery assembly and the battery pack according to the present disclosure have excellent cooling performance, and therefore can solve a heat generation problem, particularly, a heat generation problem caused by the requirements for rapid charging.

According to the present disclosure, a waterproof structure of a large-area battery assembly can be realized by applying a potting resin. In particular, according to the present disclosure, a simple waterproof sealing is realized by applying a top potting method. Therefore, since the structure of the battery assembly and the battery pack can be simplified, it is possible to obtain a direct cooling-type battery assembly and battery pack of which assembly and manufacturing process are simplified.

According to the present disclosure, since a waterproof structure is realized through a potting resin, a silicone rubber double injection structure or a waterproof foam tape, etc., as in a conventional case, is not required, so that the number of parts is reduced and the assembly process is simplified. Thereby, the cost can be reduced.

In addition, according to the present disclosure, since the reliability of the sealing is secured by applying a porous member such as a non-metallic mesh net, the waterproof reliability is also improved. According to the present disclosure, the potting resin can penetrate between the holes of the porous member, thereby increasing the bonding strength of the potting resin. Thereby, the risk of cracks occurring at the interface of the potting resin or inside the potting resin layer during the manufacturing process or at the time of vibration/impact can be eliminated, thereby further improving the waterproof reliability.

According to the present disclosure, both general vehicle cooling water and insulating oil can be used through the cooling flow passage space realized in the inside of the battery assembly.

The battery pack according to the present disclosure is formed with a venting flow passage between the cell frame of the battery assembly and the pack case, so that high-temperature gas and flames that may occur during an abnormal situation of the battery cell can be efficiently discharged, thereby ensuring the safety and reliability of the battery pack.

Furthermore, when a thermal event occurs in a battery cell to generate high-temperature gas or flames, the high-temperature gas and flames can be guided in a specific direction and quickly discharged to the outside of the pack case.

Further, in the process of discharging high-temperature gas, etc. vented from the battery cell to the outside of the pack case, other battery cells can prevent from being thermally damaged as much as possible, thereby preventing additional chain ignition.

### [BRIEF DESCRIPTION OF THE DRAWINGS]

The following drawings attached to this specification illustrate preferred embodiments of the present disclosure, and, together with the detailed description given below, serve to further understand the technical idea of the present disclosure. Therefore, the present disclosure should not be interpreted as being limited to only the matters depicted in such drawings.
FIG. 1 is a perspective view illustrating a combined state of a battery assembly according to an embodiment of the present disclosure.
FIG. 2 is an exploded perspective view of the battery assembly of FIG. 1.
FIG. 3 is a cross-sectional view of the battery assembly of FIG. 1 taken along line III-III'.
FIG. 4 is an exploded perspective view of a battery assembly according to another embodiment of the present disclosure.
FIG. 5 is a cross-sectional view of the battery assembly of FIG. 4 taken along line V-V'.
FIG. 6 is a modified embodiment of the battery assembly illustrated in FIG. 5.
FIG. 7 illustrates a mesh net as another embodiment of a porous member of the battery assembly illustrated in FIG. 5.
FIG. 8 is a schematic diagram of a battery pack according to an embodiment of the present disclosure.
FIG. 9 is an exploded perspective view of a portion of a battery pack according to another embodiment of the present disclosure.
FIG. 10 is a perspective view illustrating a combined state of a battery assembly that can be included in the battery pack of FIG. 9.
FIG. 11 is an exploded perspective view of the battery assembly of FIG. 10.
FIG. 12 is a diagram illustrating a side face of the battery assembly of FIG. 10 so that a protrusion part can be seen.
FIG. 13 is a diagram illustrating the bottom face of the battery assembly of FIG. 10, which illustrates a protrusion part formed on the cell frame.
FIG. 14 is a cross-sectional view of the battery assembly of FIG. 10 taken along line XIV-XIV'.
FIG. 15 is a diagram for explaining a vehicle according to an embodiment of the present disclosure.
FIGS. 16 to 18 are cross-sectional views of battery assemblies according to modified embodiments of the present disclosure.

### [DETAILED DESCRIPTION OF THE EMBODIMENTS]

Hereinafter, preferred embodiments of the present disclosure will be described in detail with reference to the accompanying drawings. Prior to the description, the terms used in the specification and the appended claims should not be construed as limited to general and dictionary meanings, but construed as meanings and conception coinciding the technical aspects of the present disclosure on the basis of the principle that the inventors can appropriately define the concept of the terms to explain the invention in the optimum method.

Therefore, embodiments described in the specification and the configurations illustrated in the drawings are not more than the most exemplary embodiments of the present disclosure and do not fully cover the spirit of the present disclosure. Accordingly, it should be understood that there may be various equivalents and modifications that can replace those when this application is filed.

In the drawings, the dimension of each of components or a specific portion constituting the component is exaggerated, omitted, or schematically illustrated for convenience in description and clarity. Thus, the dimension of each element does not entirely reflect an actual size. Moreover, detailed descriptions related to well-known functions or configurations will be omitted in order not to unnecessarily obscure subject matters of the present disclosure. Furthermore, since like reference numerals refer to like elements through, overlapping or repeated descriptions thereof will be omitted in various embodiments.

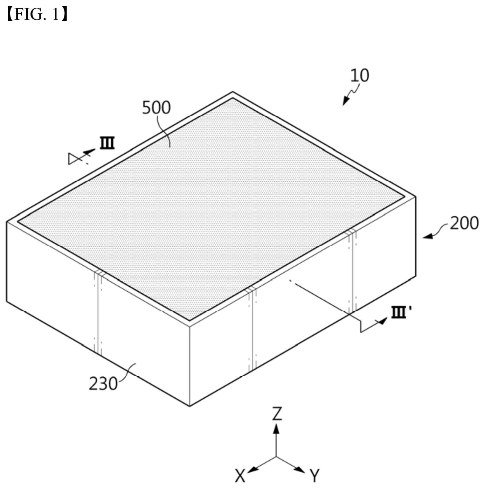

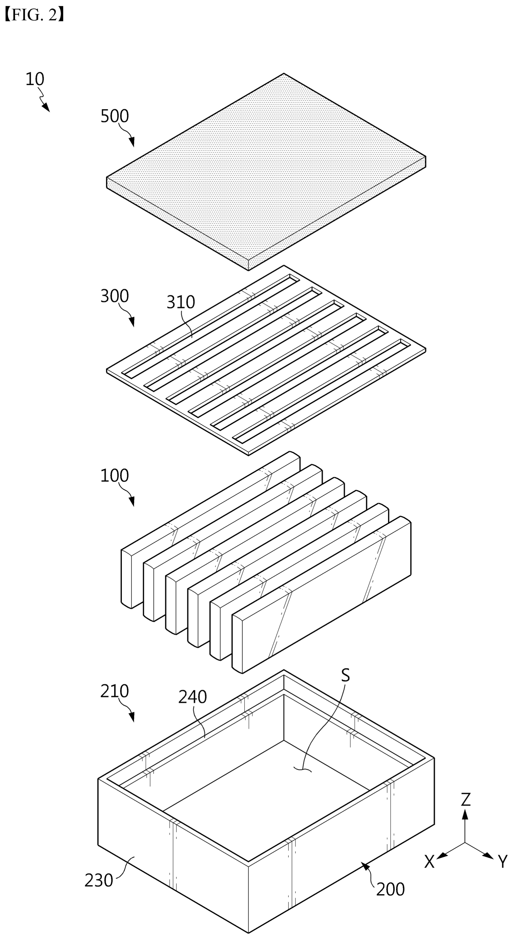

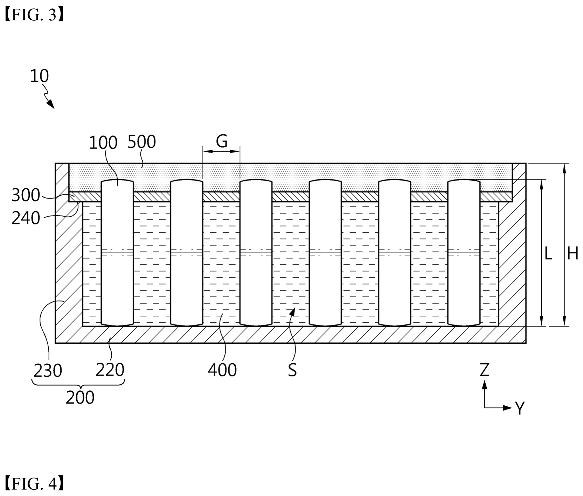

FIG. 1 is a perspective view illustrating a combined state of a battery assembly according to an embodiment of the present disclosure. FIG. 2 is an exploded perspective view of the battery assembly of FIG. 1. FIG. 3 is a cross-sectional view of the battery assembly of FIG. 1 taken along line III-III'.

Referring to FIGS. 1 to 3, a battery assembly 10 according to an embodiment of the present disclosure includes a plurality of battery cells 100, a cell frame 200, and a filling member 500. The battery assembly 10 is also provided with an isolation part 300.

The battery cell 100 may be applied to any type of secondary battery, such as a prismatic, cylindrical, or pouch-type battery cell. Within the battery assembly 10, the battery cells 100 may be arranged in rows and columns. The battery cells 100 may be electrically connected to each other.

The cell frame 200 houses the battery cells 100. As an example, the cell frame 200 may have an upper end opening 210. For example, the cell frame 200 may be provided in a box shape having an opened upper surface and consisting of four wall bodies. A portion of the wall bodies extends along the X-axis direction in the figure, and another portion of the wall bodies extends along the Y-axis direction. The battery cells 100 may stand upright in the Z-axis direction to be housed in the cell frame 200.

A battery cell 100 may be seated on the cell frame 200. The cell frame 200 is provided on the lower part of the battery cell 100, and the battery cells 100 may be seated and fixed. The cell frame 200 may be formed with a structure into which the lower part of the battery cell 100 is inserted.

In a preferred example, the cell frame 200 may include a bottom part 220 on which the battery cell 100 is seated, and a frame wall body 230 that stands upright upward from the bottom part 220. The bottom part 220 forms a lower surface of the cell frame 200, and may have an approximately rectangular shape. The frame wall body 230 extends upward from each corner of the bottom part 220 to form a side surface surrounding the battery cells 100. The frame wall body 230 and the bottom part 220 may be integral. However, this is one exemplary embodiment, and in another embodiment of the present disclosure, the bottom part 220 and the frame wall body 230 may be separate parts that are divided from each other, and the bottom part 220 and the frame wall body 230 may be assembled to form a cell frame 200. This will be described below.

The bottom part 220 may include a cell housing part that houses the battery cells 100. The lower side part of each of the battery cells 100 may be seated on the cell frame 200, and may be inserted or supported in the cell housing part. The shape of the cell housing part is not limited. The height H of the frame wall body 230 is greater than the length L of the battery cells 100, so that the battery cells 100 can be completely housed in the cell frame 200. The frame wall body 230 may be provided with a step part 240 on the inner side of the cell frame 200, so that the isolation part 300 may be seated on the step part 240.

However, this is only one exemplary embodiment, and in another embodiment of the present disclosure, the cell frame 200 and the isolation part 300 may be integral. This will be described below.

The cell frame 200 can be coupled to the isolation part 300 at a lower side of the isolation part 300. And, the lower side of the battery cells 100 can be seated on the cell frame 200. The isolation part 300 supports a portion of the battery cells 100. The isolation part 300 supports the upper side of the battery cell 100 than the position supported by the cell frame 200. Here, the battery cells 100 can be respectively inserted into the isolation part 300 and supported.

The cell frame 200 and the isolation part 300 can gather the battery cells 100 into a single mass and maintain them in a single unit state, and can protect the battery cells 100 from external impacts. In particular, the cell frame 200 functions as a main rigid body. The cell frame 200 and the isolation part 300 may be made of metal materials such as SUS for mechanical rigidity and Al having thermal conductivity. The cell frame 200 and the isolation part 300 can also be made of a composite material such as FRP that satisfies all of the electrical insulation, mechanical rigidity, and light weight requirements. Preferably, the cell frame 200 and the isolation part 300 are made of materials that can be formed by plastic injection.

The isolation part 300 can maintain a gap G between the battery cells 100 at the upper ends of the battery cell 100. The isolation part 300 may be formed with a hole 310 that penetrates through the battery cells 100, respectively. The upper parts of the battery cell 100 may be inserted into the holes 310.

Between the cell frame 200 and the isolation part 300, a cooling flow passage space S is formed to allow the cooling medium 400 to be filled between the battery cells 100. The cooling flow passage space S may be between the bottom part 220 and the frame wall body 230 of the cell frame 200, and the isolation part 300. The filling member 500 seals the upper end part of the cell frame 200. As an example, the filling member 500 may seal the upper end opening 210 of the cell frame 200. The isolation part 300 isolates between the cooling flow passage space S and the filling member 500 before the cooling medium 400 is filled. After the cooling medium 400 is filled in the cooling flow passage space S of the battery assembly 10, the isolation part 300 isolates between the cooling medium 400 and the filling member 500. The isolation part 300 allows the filling member 500 filled above the isolation part 300 not to penetrate in the side of the cooling flow passage space S and the cooling medium 400. The isolation part 300 blocks the filling member 500 in the Z-axis direction. The filling member 500 may be provided on the upper side of the isolation part 300 to prevent leakage of the cooling medium 400. The isolation part 300 and the filling member 500 may prevent the cooling medium 400 in the cooling flow passage space S from leaking to the upper end of the cell frame.

A cooling flow passage space S may be realized in the inside of the battery assembly 10 so that the side surface of the battery cell 100 is exposed, and a cooling medium 400 may be filled in this cooling flow passage space S to flow and circulate, or be maintained in a filled state. The cooling medium 400 may fill a part or whole part of the height direction of the battery cell 100. The cooling medium 400 may use both general vehicle cooling water and insulating oil. That is, the cooling medium 400 may be a fluid such as water or insulating oil. The cooling medium 400 may be directly filled between the battery cells 100 in the cooling flow passage space S between the isolation part 300 and the cell frame 200. In this manner, the battery cell 100 may be immersed in the cooling medium 400 within the battery assembly 10. Such a cooling medium 400 may play the role of directly cooling the battery cells 100 to thereby prevent the temperature of the battery cells 100 from increasing, and is excellent in cooling performance. Although not specifically illustrated in the figure, the battery assembly may comprise an inlet through which the cooling medium 400 flows in and an outlet through which the cooling medium 400 is discharged. The cooling medium 400 may flow in through the inlet, directly cool the battery cells 100, and then be discharged through the outlet.

According to the embodiments of the present disclosure, since a direct cooling method is used instead of a bottom cooling or side cooling method, the cooling performance of the battery cell 100 can be excellent. Furthermore, even if a problematic battery cell 100 ignites and the temperature rises, the cooling medium 400 inside the battery assembly 10 is maintained and heat is continuously transferred from the ignited battery cell 100 to cool the battery cell 100, thereby capable of protecting the surrounding battery cells 100 from rising in temperature.

The cooling medium 400 may be a phase change material(PCM). The phase change material can be repeatedly circulated between vaporization and liquefaction, and may be formed from a fluorine-based material having a low boiling point for more effective circulation. For example, the phase change material may be formed from a material having a boiling point of 35°C to 50°C. In addition, the phase change material may include a material having a fire extinguishing function. Accordingly, even if a fire occurs within the battery assembly 10, the fire can be quickly suppressed through the phase change material.

When the cooling medium 400 is housed in the cooling flow passage space S between the isolation part 300 and the cell frame 200, leakage of the cooling medium 400 may be problematic. Therefore, a filling member 500 is provided on the upper side of the isolation part 300 so as to prevent leakage of the cooling medium 400. The filling member 500 may be formed of a potting resin. Here, potting refers to a method in which a liquid resin is injected and applied to the upper side of the isolation part 300, and then cured to package it.

The filling member 500 is a waterproof part that prevents the cooling medium 400, which may be a fluid, from leaking out of the battery assembly 10. Therefore, the potting resin may be a potting resin having waterproof performance. The filling member 500 may be filled into the cell frame 200 on the isolation part 300 to seal the upper end of the cell frame 200. In a state where the battery cell 100 is seated on the cell frame 200 and then even the isolation part 300 is assembled on the upper part of the battery cell 100, the filling member 500 may be formed by injecting and applying a liquid resin through the upper end opening 210 of the cell frame 200 and then curing the resin.

In this manner, according to the present disclosure, since a waterproof structure is realized through a filling member 500 such as a potting resin, a silicone rubber double injection structure or a waterproof foam tape, etc. as in a conventional case are not required, and therefore the number of the parts is reduced and the assembly process is simplified. Thereby, the cost can be reduced.

Since the waterproof structure through the filling member 500 of the present disclosure is sufficient as long as the upper end opening 210 is simply filled above the isolation part 300, this is not a structure that realizes waterproof performance by inserting a separate member between parts that need to be sealed and applying pressure by a separate fixing member. Waterproof foam tape, sealant, silicone rubber material components such as O-ring, or bolting structures are not necessary at all. Therefore, the manufacturing process of the battery assembly 10 is very simple and the cost is reduced.

According to an embodiment of the present disclosure, there is a structural feature in that a step part 240 is formed in the cell frame 200 so that the isolation part 300 is housed within the cell frame 200. If the structure is such that the isolation part 300 is simply placed and coupled on the cell frame 200 without forming the step part 240, there is a risk that the filling member 500 will leak through the gap. According to an embodiment of the present disclosure, since the step part 240 is provided in the frame wall body 230 so that the isolation part 300 is housed in the inside of the cell frame 200, the upper and lower interfaces between the cell frame 200 and the isolation part 300 are not exposed to the outside. Therefore, even if a gap is formed at the portion where the cell frame 200 and the isolation part 300 are coupled, the risk of the filling member 500 leaking through the gap is prevented. Therefore, since a leakage prevention part such as a gasket or glue is not required between the cell frame 200 and the isolation part 300, the manufacturing cost does not increase. In addition, since the size of the entire battery assembly 10 is not increased, it is advantageous in terms of energy density.

Meanwhile, the battery assembly 10 is sealed by the filling member 500, so that the battery assembly 10 itself can form a closed system. The isolation part 300 functions as a guide capable of maintaining the gap G between the battery cells 100 while being assembled with the battery cells 100, thereby constantly maintaining the gap between the cells which is important in the direct cooling structure, whereby it performs the role of forming a uniform cooling flow passage space S and reducing the pressure difference of the cooling medium 400 of the battery assembly 10. In addition, after the filling member 500 is applied and cured, it is an important configuration in making the battery assembly 10 in a closed system so as to prevent the filling member 500 from flowing into the cooling flow passage space S.

The filling member 500 is a waterproof part that seals the upper end opening 210, and at the same time, it more stably fixes the upper end of the battery cell 100 that protrudes upward through the hole 310 of the isolation part 300, and also increases the heat dissipation efficiency of the battery cell 100, thereby further increasing the cooling performance of the battery cell 100.

For example, the filling member 500 is a potting resin, which may be formed by mixing with beads such as glass bubbles. The potting resin may be formed by injecting a resin material in a dilute liquid state into the battery cell 100 and curing it. Here, the injection of the resin material may be performed at a room temperature of approximately 15°C to 25°C to prevent thermal damage to the battery cell 100. Then, curing may be performed at a higher temperature.

In addition, the filling member 500 may prevent the penetration of moisture, foreign matters or the like into the battery cell 100, prevents chain ignition when a thermal event occurs due to an abnormality in the battery cell 100, and can further increase the structural rigidity of the battery assembly 10.

Specifically, the filling member 500 may be formed of a silicone resin. It goes without saying that the filling member 500 is not limited thereto, and can be formed of other resin materials, which can improve the fixing and heat dissipation efficiency of the battery cell 100 and can realize waterproof performance, in addition to the silicone resin.

The filling member 500 has a previously set predetermined viscosity, and may include at least two materials. Specifically, the filling member 500 may be prepared by mixing a specific resin and beads in a preset ratio. The filling member 500 may reduce the cost of the potting resin through mixing the beads, and may adjust the viscosity and other physical properties of the filling member 500 according to the mixing ratio.

Such a filling member 500 can guide the thermal balance of the battery cell 100, thereby preventing cooling deviation of the battery cell 100, and thus preventing local deterioration of the battery cell 100. Furthermore, by preventing local deterioration of the battery cell 100, the safety of the battery assembly 10 can also be significantly improved.

Further, the filling member 500 may also play an insulating role in preventing current flow to an adjacent battery cell 100 when damage or the like occurs in at least one specific battery cell 100 due to an abnormal situation.

Further, the filling member 500 may be made of a material having high specific heat performance or may further include such a material. Accordingly, the filling member 500 increases the thermal mass, and thus can delay the temperature rise of the battery cell 100 even in situations such as rapid charging and discharging of the battery cell 100, thereby preventing a rapid temperature rise of the battery cell 100.

Further, the filling member 500 may be made of a material having high heat resistance or may further include such a material. Accordingly, the filling member 500 can effectively prevent the propagation of thermal runaway to other adjacent battery cells 100 when a thermal event occurs in a specific battery cell 100 due to overheating or the like.

Further, the filling member 500 may be made of a material having high flame retardant performance or may further include such a material. Accordingly, the filling member 500 can minimize the risk of fire when a thermal event due to overheating or the like occurs in a specific battery cell 100.

As described above, according to the present disclosure, a filling member 500 such as potting resin is applied, so that a waterproof structure can be easily and simply realized even if the battery assembly 10 has a large area. In particular, according to the present disclosure, since the top potting method is applied, a very simple waterproof sealing is achieved without the need for other waterproof parts. Therefore, since the structure of the battery assembly 10 and the battery pack including the same can be simplified, it is possible to obtain a direct cooling-type battery assembly 10 and battery pack of which assembly and manufacturing process are simplified. Furthermore, since the number of parts is not large, it is not sensitive to foreign matters, etc. during the assembly and manufacturing process, the factors causing defects are reduced, and the manufacturing cost can be reduced.

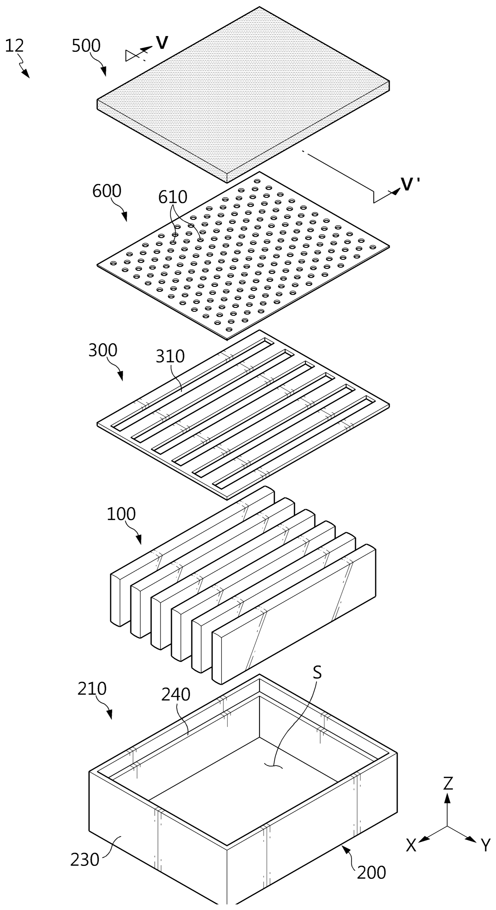

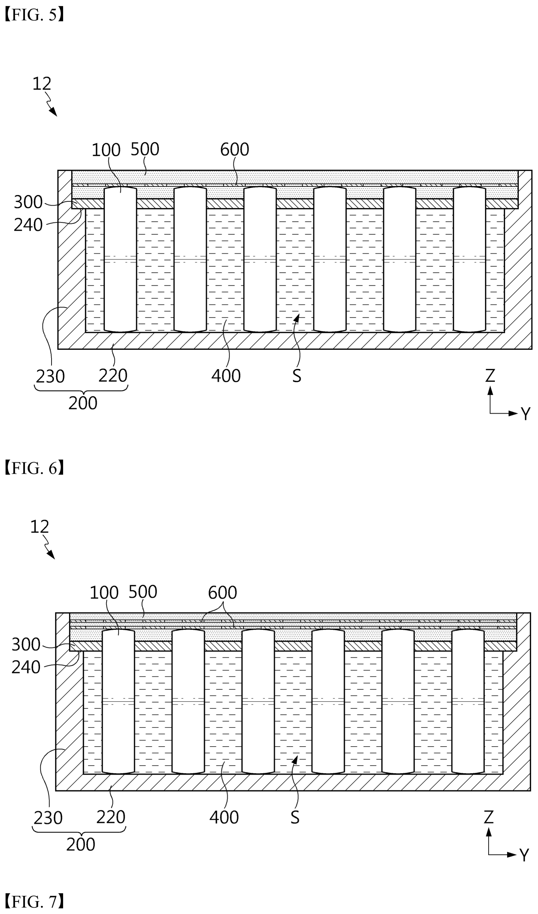

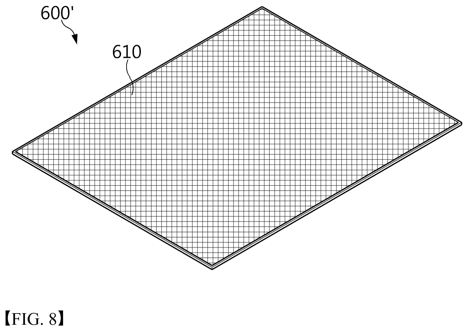

FIG. 4 is an exploded perspective view of a battery assembly according to another embodiment of the present disclosure. FIG. 5 is a cross-sectional view of the battery assembly of FIG. 4 taken along line V-V'. FIG. 6 is a modified embodiment of the battery assembly illustrated in FIG. 5. FIG. 7 illustrates a mesh net as another embodiment of a porous member of the battery assembly illustrated in FIG. 5.

The battery assembly 12 illustrated in FIGS. 4 to 6 further includes a porous member 600, as compared with the battery assembly 10 described with reference to FIGS. 1 to 3.

The porous member 600 may be included between the isolation part 300 and the filling member 500, or in the inside of the filling member 500. The porous member 600 being included in the inside of the filling member 500 may refer to a shape in which the periphery of the porous member 600 is filled with the filling member 500 as if the porous member 600 is contained in the filling member 500.

The porous member 600 has a plurality of holes 610.

The filling member 500 may penetrate through the holes 610 of the porous member 600 and extend to the upper end of the battery cell 100. The filling member 500 applied to the upper end of the porous member 600 can pass through the hole 610 of the porous member 600 and extend to the upper end of the battery cell 100, so that the periphery of the porous member 600 can be filled with the filling member 500.

The porous member 600 can securely fix the filling member 500 and prevent displacement due to impact, thereby enabling the battery assembly 12 to be operated more firmly. The filling member 500, such as a potting resin, can penetrate between the holes 610 of the porous member 600, thereby increasing the bonding strength of the filling member 500 after curing. Thereby, the risk of cracks occurring at the interface between the filling member 500 and other parts or inside the filling member 500 during the manufacturing process or at the time of vibration/impact can be eliminated, thereby further improving the waterproof reliability. If the porous member 600 is further included in the filling member 500 in this way, the reliability of the sealing is secured and thus the waterproof reliability of the battery assembly 12 is also improved.

The porous member 600 may be formed in one or more layers. The battery assembly 12 of FIG. 6 includes the porous member 600 in two layers. The porous member 600 may be formed, for example, in three layers.

The holes 610 of the porous member 600 allow the filling member 500 to pass through during injection. The porous member 600 is preferably made of a material that can withstand temperatures above a certain level. For example, the porous member 600 is preferably made of an insulating material so as not to cause an electrical short circuit. It is preferable that the holes 610 of the porous member 600 are regularly arranged so that the filling member 500 is evenly located.

In the battery assembly 12 of FIGS. 4 to 6, the porous member 600 has a shape in which a plurality of holes 610 are punched on a plate such as a film with a very thin thickness in the Z-axis direction. The shape of the hole 610 is not limited, but if it is isotropic, all properties may be equal in the X-axis direction and the Y-axis direction.

FIG. 7 illustrates a mesh net 600' as another embodiment of a porous member of the battery assembly illustrated in FIG. 5. For example, in the battery assembly 12 of FIG. 5, the porous member 600 may be changed to the mesh net 600' of FIG. 7. Preferably, the mesh net 600' is non-metallic. That is, the mesh net 600' may be a non-metallic mesh net. Non-metallicity does not cause an electrical short circuit and provides good material compatibility with the filling member 500, which may be a potting resin.

The mesh net 600' may be formed by weaving and fitting a large number of wires, or may be formed by crossing each other in a cross shape to form a grid. The mesh net 600' may have a thickness of 30 µm to 500 µm. The material of the mesh net 600' may be nylon, PP, or PE.

The mesh net 600' may have 5 to 50 meshes. The mesh is expressed as the number of meshes per inch of length as a method of grading by the size of the mesh. That is, the mesh refers to a unit that expresses the size of holes or particles in the mesh, and can be said to be the number of meshes contained in a 1-inch square. For example, 200 mesh means that wires with a diameter of 2/1000 inches are spaced apart from each other by 3/1000 inches, indicating that there are 200 meshes per inch of length. Therefore, N mesh is N/25.4 mm, and for example, if a mesh net of 5 mesh or more is used, the size of one hole 610 becomes 5.08 x 5.08 mm² or less. The mesh size is selected in consideration of the viscosity of the potting resin, which is the filling member 500. If the viscosity of the potting resin is large, the small mesh is better, and if the viscosity of the potting resin is small, the mesh may be large. If the mesh is large and the gap between meshes is narrow, it may be clogged with foreign matters such as dust, and thus the mesh size should be appropriate.

Since the mesh net 600' is in the form of a thin plate, it can be appropriately placed inside the battery assembly 12, and can suppress an increase in the size of the battery assembly 12. Further, since the mesh net 600' has a plurality of holes 610, an increase in weight can also be suppressed. Thus, according to the present disclosure, by using the mesh net 600', it is possible to suppress an increase in the size or weight of the battery assembly 12 and also secure the reliability of the sealing and improve the waterproof reliability of the battery assembly 12.

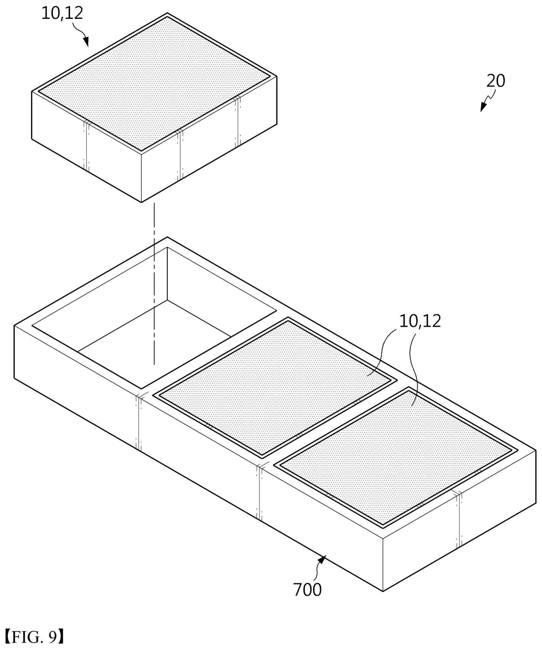

FIG. 8 is a schematic diagram of a battery pack according to an embodiment of the present disclosure.

Referring to FIG. 8, the battery pack 20 may be configured to include a battery assembly 10 or 12 and a pack case 700. One or more battery assemblies 10 or 12 may be provided. When a plurality of battery assemblies 10 or 12 are provided, they may be arranged in many various ways. For example, as shown in FIG. 8, the battery assemblies 10 or 12 may be arranged in a horizontal direction. Alternatively, the battery assemblies 10 or 12 may be arranged in a horizontal direction and a vertical direction, but are not limited thereto.

The battery pack 20 is a control module for controlling the battery assembly 10 or 12 and may include a battery management system(BMS). The control module may manage the battery assembly 10 or 12 through charging/discharging, voltage and temperature sensing, etc. of the battery assembly 10 or 12. In addition, the control module may further include other various components, such as components of the battery pack known at the time of filing of the present application, such as relays, current sensors, etc.

According to the present disclosure, an immersion cooling-type battery assembly 10 or 12 having excellent cooling performance and a battery pack 20 comprising the same are provided. The battery assembly 10 or 12 and the battery pack 20 according to the present disclosure have excellent cooling performance and thus can solve the heat generation problem, especially the heat generation problem according to the requirement of rapid charging.

Since the battery assembly 10 or 12 has a simple waterproof sealing structure of a top potting method, the structure of the battery pack 20 comprising the same is also simplified. Therefore, the assembly and manufacturing process of the battery pack 20 is simplified.

The battery assembly 10 or 12 is reduced in the number of parts and simplified in the assembly process. Therefore, the battery pack 20 comprising the same can reduce costs.

Further, the battery assembly 12 has ensured sealing reliability by applying a porous member 600 such as a non-metallic mesh net 600', thereby improving the waterproof reliability. Accordingly, the battery pack 20 comprising the same has further improved waterproof reliability.

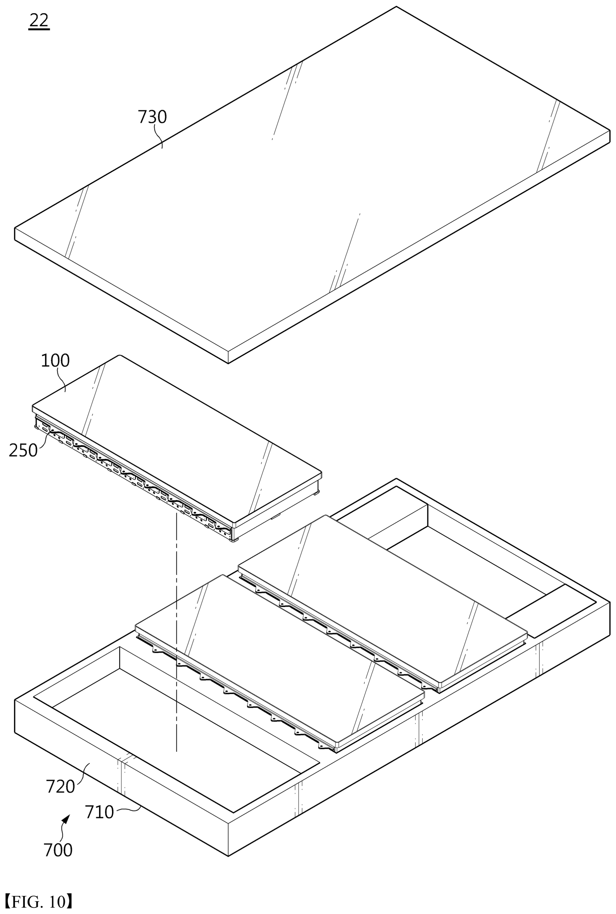

FIG. 9 is an exploded perspective view of a portion of a battery pack according to another embodiment of the present disclosure.

Referring to FIG. 9, the battery pack 22 includes a battery assembly 14 and a pack case 700 that houses the battery assembly 14. The pack case 700 may be configured to include, for example, a lower case 710, a side case 720, and an upper case 730.

The lower case 710 is configured to seat at least one battery assembly 14 thereon. The lower case 710 may be formed in a square plate shape, but is not limited thereto. The lower case 710 forms a bottom part of the pack case 700. The side case 720 may be configured to extend upward from an edge of the lower case 710. The side case 720 defines the height of the pack case 700 and forms a previously set space between the side case 720 and the lower case 710. And, at least one battery assembly 14 is seated in the space between the side case 720 and the lower case 710. The side case 720 may include a long side frame having a relatively long length and a short side frame having a relatively short length. Alternatively, the side case 720 may include side frames all having the same length. And, the upper case 730 may be coupled to the side case 720.

In addition. the pack case 700 may further include a cross beam 740 that houses a plurality of battery assemblies 14 and partitions between the plurality of battery assemblies 14. The battery assembly 14 may be provided with a flange part 250. The flange part 250 may be provided to bolt-couple and fix the battery assembly 14 to the side case 720 or the cross beam 740.

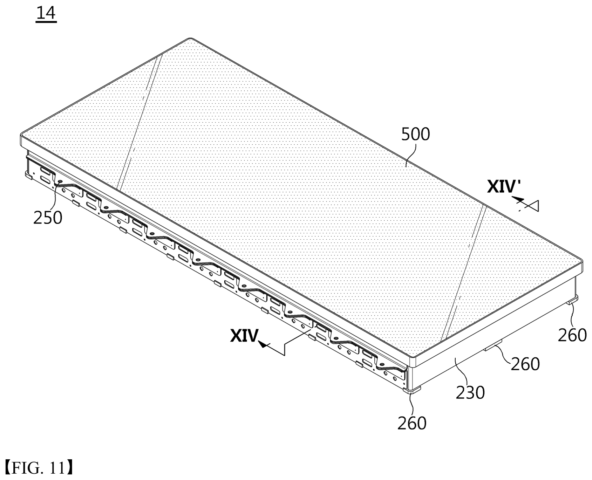

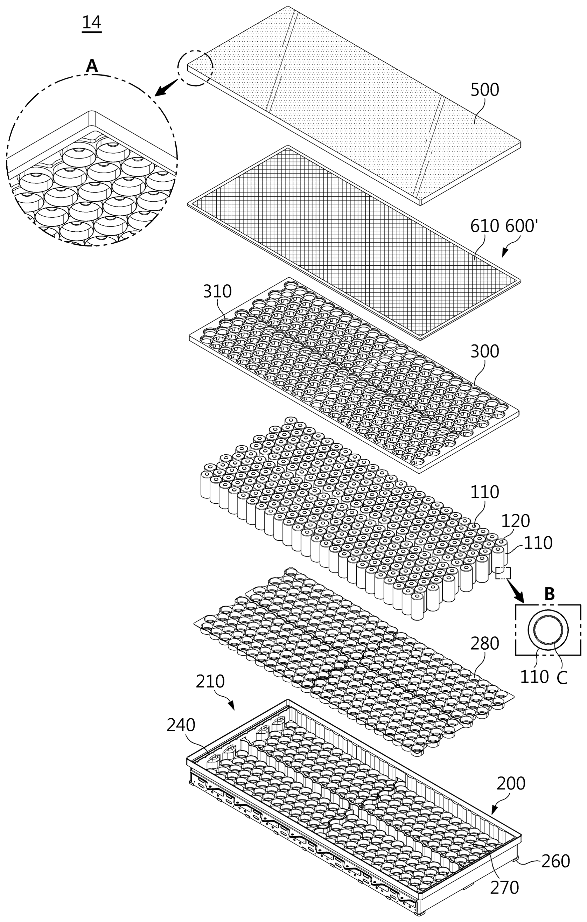

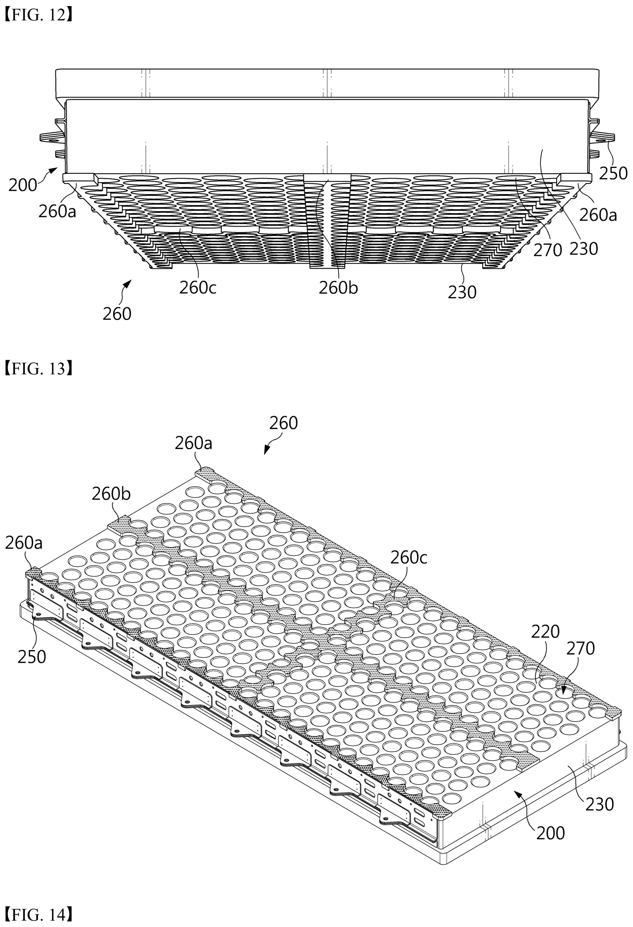

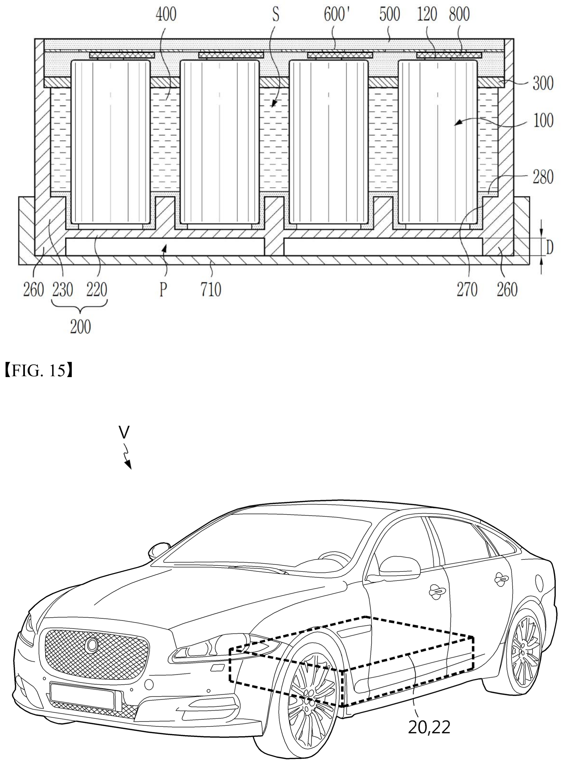

FIG. 10 is a perspective view illustrating a combined state of a battery assembly that can be included in the battery pack of FIG. 9. FIG. 11 is an exploded perspective view of the battery assembly of FIG. 10. FIG. 12 is a diagram illustrating a side face of the battery assembly of FIG. 10 so that a protrusion part can be seen. FIG. 13 is a diagram illustrating the bottom face of the battery assembly of FIG. 10, which illustrates a protrusion part formed on the cell frame. FIG. 14 is a cross-sectional view of the battery assembly of FIG. 10 taken along line XIV-XIV'.

Referring to FIGS. 10 to 14, the battery assembly 14 is similar to the battery assembly 12, and includes a plurality of battery cells 100, a cell frame 200 that houses the battery cells 100, a filling member 500 that seals the upper end of the cell frame 200, and an isolation part 300 that defines a cooling flow passage space S that allows a cooling medium 400 to be filled between battery cells 100, and isolates the cooling flow passage space S and the filling member 500. The cell frame 200 forms a venting flow passage P for gas or flame generated in the battery assembly 14 between the pack case 700.

The enlarged view of section A of FIG. 11 illustrates the bottom surface of the filling member 500. Molding with the filling member 500 potted on the upper side of the isolation part 300 may provide a configuration in which the upper side of the filling member 500 covers the upper case 730 of the pack case 700.

In this embodiment, the battery cell 100 may be a cylindrical battery cell or a prismatic battery cell. The battery cell 100 has an electrode assembly housed inside a battery can 110. The electrode assembly may be formed as a jelly roll type having a structure in which a positive electrode plate, a negative electrode plate, and a separator interposed between the positive and negative electrode plates are wound in one direction, and a center hole is formed. The battery can 110 is formed in a cylindrical or prismatic shape, and the electrode assembly is housed inside the battery can 110, and may be electrically connected to the negative electrode plate of the electrode assembly. Accordingly, the battery can 110 may have the same polarity as the negative electrode plate, i.e., a negative polarity. A cell terminal 120 electrically connected to the positive electrode plate of the electrode assembly is extended outside the battery can 110. The cell terminal 120 has a positive polarity.

The enlarged view of section B of FIG. 11 illustrates the bottom surface of the battery cell 100. The battery cell 100 may include a vent part C at the lower end through which gas inside the battery cell 100 is discharged. The vent part C may include a venting structure such as a vent notch. The vent part C is ruptured when the pressure inside the battery cell 100 abnormally increases, so that the internal gas is discharged to the outside. If the vent part C is included at the lower end, particularly at the bottom part, of the battery cell 100, it may be helpful for guiding the discharge direction of the vent gas downward in the battery pack 22. This vent part C may be provided near the center of the bottom part, which is the lower end of the battery cell 100. However, without being limited thereto, the vent part C may be provided at any other positions that can discharge the gas toward the lower side of the battery cell 100.

The battery assembly 14 may further include a busbar 800 that conducts electrical connection between the battery cells 100 at the upper end of the battery cell 100.

The cell frame 200 may include a protrusion part 260 that protrudes downward on the lower surface, and the protrusion part 260 may make surface contact with the pack case 700 to define a venting flow passage P. The protrusion part 260 may maintain a Z-axis gap D between the lower end of the battery cell 100 and the pack case 700 inside the battery assembly 14. The protrusion part 260 may include a first protrusion part 260a, a second protrusion part 260b, and a third protrusion part 260c.

The lower surface of the protrusion part 260 can be supported in contact with the upper surface of the pack case 700. Accordingly, the venting flow passage P can be formed by being surrounded by the lower surface of the cell frame 200, the protrusion part 260, and the upper end surface of the pack case 700, and a predetermined space through which gas and flame flow can be provided at the lower side of the battery assembly 14. Since the contact is a surface contact rather than a point contact or a line contact, a relatively wide contact area is secured, and the surface contact portion functions as a type of barrier, so that gas discharged from the battery cell 100 included in the battery assembly 14 can be prevented from spreading in all directions. In addition, since the venting gas is guided to move in a predetermined direction, i.e., along the venting flow passage P, the safety can be secured.

When the vent part C is opened due to an abnormality in a specific battery cell 100, the lower end of the cell frame 200 (e.g., the portion where the cell housing groove 270 of FIG. 11 is formed) is torn, and flames can be normally ejected. The ejected flames can move along the venting flow passage P and be emitted to the outside of the battery pack 22 through a venting device (not shown) that can be provided in the pack case 700. At this time, the bottom surface of the cell frame 200 may be preferably made of a material that can be ruptured at a certain pressure or more or melted by heat, such as a plastic material. Since the bottom surface of the cell frame 200 is usually closed, even if venting occurs in an adjacent battery cell 100, the venting gas or flames does not flow into another battery cell 100 through the bottom surface of the cell frame 200.

The cell frame 200 may be fixed by adhesion to the pack case 700 or the lower case 710. For example, the cell frame 200 may be mutually adhered to the pack case 700 or the lower case 710 using a structural adhesive or the like. They can be adhered to each other using a structural adhesive or the like to make the connection and fixing structure stronger.

The lower end of the battery cell 100 is seated in the cell frame 200. For this purpose, the bottom part 220 of the cell frame 200 includes a cell housing part that houses the battery cell 100, and the cell housing part may be provided with a cell housing groove 270 that houses each battery cell 100. The depth of the cell housing groove 270 is a depth in which a portion of the height of the battery cell 100 is inserted, and an adhesive 280 may be provided between the cell housing groove 270 and the battery cell 100. The cell housing grooves 270 are arranged side by side mutually so that the battery cells 100 can be inserted respectively. The cell housing grooves 270 are formed along the outer peripheral surface of the cylindrical battery cell 100. Therefore, the cell housing grooves 270 are also cylindrical. The cell housing grooves 270 can support the side surface and the bottom surface of the battery cell 100 at the lower end of the battery cell 100.

The cell housing grooves 270 can separately house the battery cells 100, respectively. When the battery cells 100 are inserted and stored in the cell housing grooves 270 in an upright state, movement in the up, down, left and right directions can be prevented.

The vent part C of each battery cell 100 is assembled in the vertical seating direction of the cell frame 200, and is isolated from the vent part C of the other battery cell 100 by the structure of the cell frame 200 including the adhesive 280 and the cell housing groove 270. Therefore, when a thermal runaway occurs due to an abnormality in one battery cell 100, the flames are not transferred to the surrounding battery cells 100, so that the heat propagation may be delayed.

The adhesive 280 is interposed between the cell frame 200 and the battery cell 100 and is a waterproof adhesive. The adhesive 280 may be filled in a partial region of the side surface of the battery cell 100 and between the vent part C and the cell frame 200. Here, the waterproof adhesive may be an epoxy-based waterproof resin.

The adhesive 280 not only is applied to the side surface of the battery cell 100 but also is applied to the vent part C to prevent exposure of the vent part C. Therefore, even if any of the battery cells 100 experiences thermal runaway due to an abnormality, the flame will not be transmitted to the surrounding battery cells 100, and they are not vulnerable to chain fires.

The adhesive 280 can be applied to the cell frame 200 to stably fix the battery cell 100 and also improve the waterproof performance. The structure of the cell housing groove 270 may be formed to have sufficient contact area on the surface where the adhesive 280 and the battery cell 100 are in contact with each other.

As described above, the cell frame 200 fixes the basic position of the battery cell 100. Further, it functions as the main rigid body of the battery assembly 14. Further, the venting flow passage P can be realized through the protrusion part 260 during manufacturing using the battery pack 22. The protrusion part 260 is provided at the lower part of the battery assembly 14, so that the space where the battery assembly 14 is disposed and the space where the venting gas moves can be separated vertically inside the pack case 700. Further, the space where the gas flows, i.e. the venting flow passage P, is separated into several regions by the protrusion part 260, so that the discharge passage of the gas can be diversified, and the volume of the total discharge passage can also be increased. Therefore, the venting flow passage P formed in the battery pack 22 of the present disclosure can be effective in smoothly discharging the venting gas to the outside of the battery pack 22 even if a large amount of venting gas is generated.

As described above, the frame wall body 230 can be erected upward from the bottom part 220, and the isolation part 300 can be seated on the step part 240 of the frame wall body 230.

The isolation part 300 may be placed on the step part 240 at the upper end of the battery cell 100. The position of the step part 240 is determined taking this into consideration. The upper end of the isolation part 300 may be located below the busbar 800. A non-metallic mesh net 600' may be located on the busbar 800 above the isolation part 300. The busbar 800 is a component that conducts electrical connection between the battery cells 100 as described above. Contact between such a busbar 800 and the cooling medium 400 that has leaked to the cell terminal can cause a degradation in performance of the battery assembly including the battery cell 100. Also, if the cooling medium 400 is water, a short circuit may occur when the cooling medium 400 comes into contact with the busbar 800, which may cause ignition or explosion. The isolation part 300 and the filling member 500 according to the present embodiment separate the cooling flow passage space S filled with the cooling medium 400 and the space where the electrical connection of the battery cells 100 is conducted, thereby minimizing the influence of the cooling medium 400 on the electrical connection of the battery cells 100 while maintaining the effect of enhancing the cooling performance due to direct cooling of the cooling medium 400.

The isolation part 300 is formed with a hole 310 that penetrates through the battery cells 100, respectively. A cooling flow passage space S of a cooling medium 400 for direct cooling can be realized between the isolation part 300 and the cell frame 200. If the battery cell 100 is cylindrical, the hole 310 of the isolation part 300 can be circular, and if the battery cell 100 is prismatic, the hole 310 of the isolation part 300 can be prismatic.

The manufacturing process of the battery assembly 14 can be as follows.

An adhesive 280 is applied to the cell frame 200, and the battery cell 100 is assembled. The isolation part 300 is placed on the step part 240. After the busbar 800 is welded to the battery cell 100, a mesh net 600' is placed on the isolation part 300, and a filling member 500 is applied. If the cooling medium 400 is of a flowing structure, the battery assembly 14 is manufactured into a battery pack 22, and then the cooling medium 400 is supplied to the inside of the battery assembly 14 by flowing the cooling medium 400, thereby filling the cooling flow passage space(S). If the cooling medium 400 is of a non-flowing structure, a process of injecting the cooling medium 400 into the inside of the battery assembly 14 before or after applying the filling member 500 may be included.

According to the present disclosure, the assembly of the battery assembly 14 can be easily performed, thereby achieving excellent processability. Further, since it may not include sealing parts such as O-rings, the number of parts of the battery assembly 14 can be reduced. Therefore, according to this aspect of the present disclosure, the manufacturing cost and time, weight, etc. can be reduced, so that the productivity of the battery assembly 14 can be improved.

In this manner, the present disclosure can provide a simple and compact battery assembly 14 without complicating the overall structure and taking up a lot of space, and also can suppress the occurrence of temperature deviation between one end and the other end of the battery cell 100 by using a direct cooling method. In addition, a battery pack 22 comprising such a battery assembly 14 and a vehicle comprising such a battery pack 22 can be provided. Such a battery pack 22 and a vehicle comprising such a battery pack 22 can improve safety and durability.

Referring mainly to FIGS. 12 and 13, the cell frame 200 is formed with a protrusion part 260. Here, the protrusion part 260 may be formed in various ways. For example, the protrusion part 260 may include a first protrusion part 260a, a second protrusion part 260b, and a third protrusion part 260c. The first protrusion 260a may be provided in a pair, and a pair of first protrusions part 260a may be formed on both side edges of the bottom part, respectively. And, the second protrusion part 260b may be formed between a pair of first protrusions part 260a so as to be parallel to the pair of first protrusion parts 260a. Here, the second protrusion part 260b may be formed at the exact center of the pair of first protrusion parts 260a, but is not limited thereto, and may be formed at various positions between the pair of first protrusion parts 260a. Further, the second protrusion part 260b may be formed in parallel to the pair of first protrusion parts 260a, but is not limited thereto. The third protrusion part 260c may be formed to intersect the second protrusion part 260b. Here, the third protrusion part 260c may be formed to pass through the exact center of the second protrusion part 260b, but is not limited thereto, and may be formed to pass through various positions of the second protrusion part 260b. In addition, the third protrusion part 260c may be formed to be orthogonal to the second protrusion part 260b, but is not limited thereto.

The number and height of the protrusion parts 260 can be changed in accordance with the required rigidity or the designer's intention. Further, the height of the protrusion parts 260 and the gap between the neighboring protrusion parts 260 should be provided so as to secure a minimum space for quickly discharging gas or flames. The volume of the venting flow passage P can be set variously in accordance with the height of the protrusion parts 260 and the gap between the neighboring protrusion parts 260.

Referring to FIG. 14, the protrusion parts 260 of the cell frame 200 come into contact with the lower case 710 of the pack case 700, thereby defining the venting flow passage P. The protrusion parts 260 are seated on the pack case 700 and thus can prevent the movement of gas or flames in the direction crossing the protrusion parts 260.

The flames can be discharged through this venting flow passage P. By optimizing the thickness of the vent direction of the cell housing groove 270, flame ejection can be facilitated when one battery cell 100 ignites. In this way, a venting flow passage P can be formed through the bottom surface structure of the cell frame 200, and it can be discharged to the outside of the battery pack 22 when the battery cell 100 ignites.

The battery cell 100 can be stably housed in the cell housing groove 270 and housed inside the pack case 700 while the vent part C being isolated from other battery cells 100 by an adhesive 280. Further, the battery cell 100 can be housed inside the pack case 700 while being supported by the protrusion part 260 of the cell frame 200. As mentioned above, since the vent part C of the battery cell 100 is formed on the bottom part side of the battery cell 100, high-temperature gas or flames discharged downward through the vent part C can flow through the venting flow passage P between the cell frame 200 and the pack case 700. The pack case 700 may further include a venting device, so that gas and flames flowing through the venting flow passage P can be quickly discharged to the outside of the pack case 700. The spreading of gas or flame generated in any of the battery cells 100 from the inside of the battery assembly 14 to the side surface is blocked by the cell frame 200, and the spreading from the inside of the battery assembly 14 to the side surface is blocked by the cell frame 200 and the cross beam 740. In addition, the spreading of the gas or flames upward from the inside of the battery assembly 14 is blocked by the filling member 500, and the spreading upward from the inside of the battery pack 22 can be blocked by the filling member 500 and the upper case 730.

As described above, when a thermal event occurs in a battery cell 100 to generate high-temperature gas or flame, the battery pack 22 according to the present disclosure can guide the gas or flame through the cell frame 200 in a specific direction through the venting flow passage P rather than in all directions, and discharge it to the outside of the pack case 700. In the process of discharging the gas or flame to the outside of the pack case 700, other battery cells 100 can be prevented from being thermally damaged as much as possible.

In addition, when gas is generally emitted from a battery cell, the electrode plate and active material particle fragments inside the battery cell may be discharged to the outside under the state heated to a high temperature, and such high-temperature particles may appear in the form of sparks. The battery pack 22 according to the present disclosure prevents high-temperature particles from easily escaping directly to the outside of the battery pack 22 even if they are discharged from the battery cell 100, and allows them to escape by sufficiently lowering the temperature while being guided through the venting flow passage P, which is the space between the cell frame 200 and the pack case 700, thereby preventing the particles from acting as an ignition source outside the battery pack 22.

That is, in a conventional battery pack, the venting gas spreads in all directions inside the battery pack and is then discharged upward, or the venting gas is not easily discharged to the outside of the battery pack, which lengthens the time it takes to discharge the venting gas and can significantly reduce the safety of the battery pack. However, according to the present embodiment, the venting gas is discharged downward from the battery assembly 14 and quickly guided in a specific direction through the venting flow passage P, so that the possibility of spreading in all directions from the inside of the battery pack 22 is low, and additional chain ignition can be prevented.

Furthermore, according to the present disclosure, since the venting flow passage P by the cell frame 200 and the pack case 700 is located at a lower part and not upper part of the battery pack 22, so that if high-temperature gas or flames are discharged from the battery cell 100 in a situation such as thermal runaway, the discharged gas or flames may not be directed upward. In particular, when a passenger is located above the battery pack 22, as in an electric vehicle, the above-mentioned embodiment can suppress or delay gas, flames, and the like from being directed toward the passenger. In particular, according to the embodiment of the present disclosure, directional venting can be performed below the battery pack 22 and to a lateral side connected thereto, so that the safety of users located on the upper side, such as passengers, can be increased.

FIG. 15 is a diagram for explaining a vehicle according to an embodiment of the present disclosure.

Meanwhile, the present disclosure can provide a vehicle V comprising a battery pack 20 or 22 according to the above-mentioned embodiment. That is, the battery pack 20 or 22 according to the present disclosure can be applied to a vehicle such as an electric vehicle or a hybrid vehicle. For example, the battery pack 20 or 22 can be installed in a body frame or trunk space under the seats of the vehicle.

It goes without saying that the battery pack 20 or 22 according to the present disclosure can be applied to ESS (Energy Storage System) or various electric devices in addition to vehicles. In this manner, devices or equipment and facilities equipped with battery pack 20 or 22, such as vehicle V according to an embodiment of the present disclosure, include the aforementioned battery pack 20 or 22, and thus can be implemented while having all of the advantages of the aforementioned battery pack 20 or 22.

In other words, the vehicle V includes a battery pack 20 or 22, wherein the battery pack 20 or 22 includes a battery assemblies 10, 12 and 14 as described above, thereby including a battery pack 20 or 22 with excellent cooling performance and improved waterproof reliability. Therefore, the vehicle V including the same is safe and easy to operate.

In addition, the battery pack 22 can efficiently discharge high-temperature gas and flames, thereby ensuring the safety and reliability of the battery pack 22 and lengthening the flame movement path. Therefore, even if a problem occurs in the battery pack 22 when the vehicle V travels, stability is maintained. Further, since this battery pack 22 has excellent stability and can be used for a long period of time, the vehicle V including the same is safe and easy to operate.

In this manner, the vehicle V including the battery pack 20 or 22 of the present disclosure has improved safety and durability.

Further, since the battery assembly 12 or 14 can eliminate the risk of cracks occurring at the potting resin interface or in the inside of the potting resin layer at the time of vibration/impact, the waterproof reliability is further improved. Therefore, the battery pack 20 or 22 including the same is very advantageous for application to vehicles V and the like that are frequently exposed to external vibrations.

As is well known, ESS previously stores new and renewable energy such as solar and wind power which are difficult to produce at a desired time, and then makes them available for use at the time of need. In order to configure a single system that stores hundreds of kWh or more of power, a battery pack 20 or 22 according to the present disclosure can be used to store power in such an ESS. The battery pack 20 or 22 according to the present disclosure includes the battery assemblies 10, 12 and 14 according to the present disclosure as described above, and thus has excellent cooling performance and reliable waterproof performance, and even if a thermal event occurs in the battery cell 100 to generate high-temperature gases or flames, they can be quickly discharged to the outside of the pack case 700. Thus, even if a problem occurs in some battery packs, ESS stability is maintained and the spread of fire is prevented.

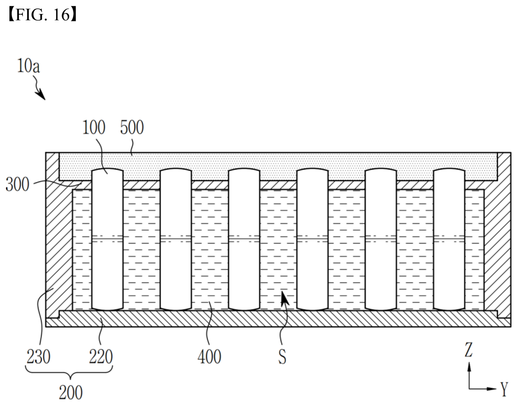

Meanwhile, referring again to FIG. 3, in the case of the above-mentioned battery assembly 10, the cell frame 200 and the isolation part 300 may be separate parts from each other, and the bottom part 220 and the frame wall body 230 in the cell frame 200 may be integral with each other. However, as mentioned above, this is an exemplary structure, and the bottom part 220 and the frame wall 230 and the isolation part 300 in the cell frame 200 may be integral with each other or may be separate parts from each other. That is, the isolation part 300 in the present disclosure is a term that comprehensively refers to both parts that are separate from the cell frame and parts that are integrated with the cell frame. Below, modified embodiments of the present disclosure will be described with reference to FIGS. 16 to 18.

FIGS. 16 to 18 are cross-sectional views of battery assemblies according to modified embodiments of the present disclosure.

First, referring to FIG. 16, in the battery assembly 10a according to the modified embodiment, the isolation part 300 and the frame wall body 230 of the cell frame 200 may be integral with each other. Further, the bottom part 220 and the frame wall 230 of the cell frame 200 may be separate parts separated from each other, or may be formed such that the frame wall 230 is assembled onto the bottom part 220.

The isolation part 300 and the frame wall body 230 of the cell frame 200 may be integral parts manufactured by integral injection molding.

A step structure for assembly may be provided between the bottom part 220 and the frame wall 230, and an additional waterproof adhesive may be applied to the portion where the bottom part 220 and the frame wall body 230 are assembled to each other. Further, although not specifically illustrated in the figure, a fastening structure using bolts and nuts may be applied to the assembly between the bottom part 220 and the frame wall body 230.

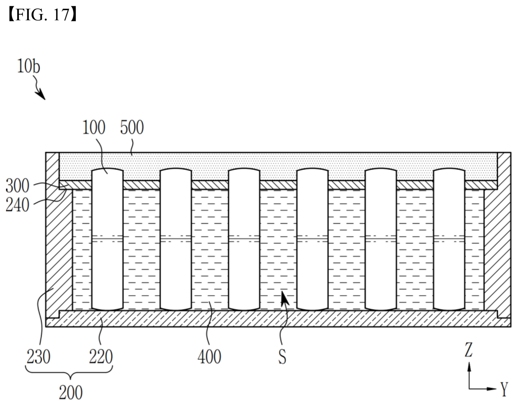

Next, referring to FIG. 17, in the battery assembly 10b according to the modified embodiment, the isolation part 300 and the frame wall 230 of the cell frame 200 being separate parts from each other is the same as the battery assembly 10 in FIG. 3. The isolation part 300 may be placed on the step part 240 of the frame wall 230. However, the bottom part 220 and the frame wall body 230 in the cell frame 200 may be separate parts separated from each other, and the frame wall body 230 may be assembled on the bottom part 220. A step structure for assembly may be provided between the bottom part 220 and the frame wall body 230, and an additional waterproof adhesive may be applied to the portion where the bottom part 220 and the frame wall body 230 are assembled. In addition, although not specifically illustrated in the figure, a fastening structure using bolts and nuts may be applied to the assembly between the bottom part 220 and the frame wall 230.

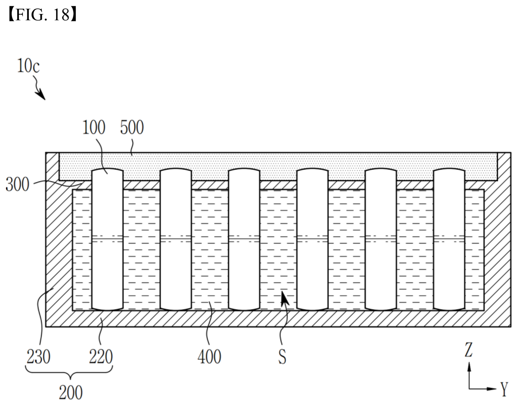

Next, referring to FIG. 18 in the battery assembly 10c according to a modified embodiment, the bottom part 220 of the cell frame 200, the frame wall body 230, and the isolation part 300 may all be integral. The bottom part 220, the frame wall 230, and the isolation part 300 may all be integral parts that are integrally injection-molded and manufactured at one time.

Although the invention has been described in detail above with reference to limited embodiments and drawings, it will be appreciated by those skilled in the art that the scope of the present disclosure is not limited thereto, and various modifications and changes can be made to the invention without departing from the principles and sprit of the invention, the scope of which is defined in the appended claims and their equivalents.

### [Description of Symbols]

| | | | |
|---|---|---|---|
| 10, 12, 14: | battery assembly | 20, 22: | battery pack |
| 100: | battery cell | 200: | cell frame |
| 210: | upper end opening | 220: | bottom part |
| 230: | frame wall body | 240: | step part |
| 250: | flange part | 260: | protrusion part |
| 270: | cell housing groove | 280: | adhesive |
| 300: | isolation part | 310: | hole |
| 400: | cooling medium | 500: | filling member |
| 600: | porous member | 610: | hole |
| 710: | lower case | 720: | side case |
| 730: | upper case | 740: | cross beam |
| 800: | busbar | C: | vent part |
| P: | venting flow passage | S: | cooling flow passage space |
| V: | vehicle | | |

## Claims

1. A battery assembly comprising:
a plurality of battery cells;
a cell frame that houses the plurality of battery cells; and
a filling member that seals the upper end of the cell frame,
wherein the battery assembly is provided with an isolation part that defines a cooling flow passage space for allowing a cooling medium to fill between the plurality of battery cells, and isolates between the cooling flow passage space and the filling member.

2. The battery assembly of claim 1,
further comprising a porous member that is located between the isolation part and the filling member or in the inside of the filling member, and has a plurality of holes.

3. The battery assembly of claim 2, wherein:
the filling member penetrates through the holes in the porous member and extends to the upper end of the battery cell.

4. The battery assembly of claim 2, wherein:
the porous member is formed in one or more layers.

5. The battery assembly of claim 2, wherein:
the porous member is a non-metallic mesh net.

6. The battery assembly of claim 5, wherein:
the mesh net has 5 to 50 meshes.

7. The battery assembly of claim 5, wherein:
the mesh net has a thickness of 30 µm to 500 µm.

8. The battery assembly of claim 5, wherein:
a material of the mesh net is nylon, PP or PE.

9. The battery assembly of claim 1, wherein:
the cell frame comprises:
a bottom part including a cell housing part that houses the plurality of battery cells, and
a frame wall body that stands upright upward from the bottom part,
wherein the frame wall body is provided with a step part on the inner side of the cell frame, so that the isolation part is seated on the step part.

10. The battery assembly of claim 1, wherein:
the cell frame comprises a bottom part including a cell housing part that houses the plurality of battery cells,
the cell housing part is provided with a cell housing groove that houses each of the plurality of battery cells, respectively, the depth of the cell housing groove is a depth into which a portion of the height of the battery cell is inserted, and an adhesive is provided between the cell housing groove and the battery cell.

11. The battery assembly of claim 1, wherein:
the isolation part is formed with a hole that penetrate through the plurality of battery cells, respectively.

12. The battery assembly of claim 1,
further comprising a busbar that conducts electrical connection between the battery cells at the upper end of the battery cells.

13. The battery assembly of claim 12, wherein:
the upper end of the isolation part is located below the busbar.

14. The battery assembly of claim 1, wherein:
the filling member is formed of a potting resin.

15. The battery assembly of claim 1, wherein:
the cooling medium is water or insulating oil.

16. A battery pack comprising the battery assembly of any one of claims 1 to 15.

17. A battery pack comprising:
a battery assembly; and
a pack case that houses the battery assembly,
wherein the battery assembly comprises,
a plurality of battery cells;
a cell frame that houses the plurality of battery cells;
a filling member that seals the upper end of the cell frame; and
an isolation part that defines a cooling flow passage space for allowing a cooling medium to fill between the plurality of battery cells, and isolates between the cooling flow passage space and the filling member.
wherein the cell frame forms a venting flow passage for gas or flame generated in the battery assembly between the cell frame and the pack case.

18. The battery pack of claim 17, wherein:
the cell frame comprises a protrusion part that protrudes downward from a bottom surface thereof, and the protrusion part makes surface contact with the pack case to define the venting flow passage.

19. The battery pack of claim 17, wherein:
the cell frame comprises:
a bottom part including a cell housing part that houses the plurality of battery cells, and
a frame wall body that stands upright upward from the bottom part,
wherein the frame wall body is provided with a step part on the inner side of the cell frame, so that the isolation part is seated on the step part.

20. The battery pack of claim 17, wherein:
the cell frame comprises a bottom part including a cell housing part that houses the plurality of battery cells,
the cell housing part is provided with a cell housing groove that houses the plurality of battery cells, respectively, the depth of the cell housing groove is a depth into which a portion of the height of the battery cell is inserted, and an adhesive is provided between the cell housing groove and the battery cell.

21. The battery pack of claim 17,
further comprising a busbar that conducts electrical connection between the battery cells at the upper end of the battery cells,
wherein the isolation part is formed with a hole that penetrates through the plurality of battery cells, respectively,
wherein the upper end of the isolation part is located below the busbar, and
wherein the filling member is formed of a potting resin.

22. The battery pack of claim 17, wherein:
the battery cell comprises a vent part provided at the lower end of the battery cell to discharge gas within the battery cell.

23. A vehicle comprising the battery pack of any one of claims 17 to 22.
